# EUROPÄISCHE PATENTANMELDUNG

(11) **EP 4 530 500 A1**
(43) Veröffentlichungstag der Anmeldung: **02.04.2025**
(21) Anmeldenummer: 23200013.3
(22) Anmeldetag: 27.09.2023
(51) Int. Cl.: F16H 57/08, F16D 1/00, F16D 1/10

(54) **WELLE-NABE-VERBINDUNG MIT VERSCHLEISSOPTIMIERTER SCHICHT**

(71) Anmelder: Flender GmbH, 46395 Bocholt (DE)
(72) Erfinder: FINGERLE, Thorsten, 46395 Bocholt (DE); JOHN, Sebastian, 46395 Bocholt (DE); KLEIN, Andreas, 46395 Bocholt (DE)
(74) Vertreter: Michalski Hüttermann & Partner Patentanwälte mbB

(57) **Zusammenfassung**

Welle-Nabe-Verbindung 10 für ein Planetengetriebe 2, mit einem inneren Nabenelement 12, einem mit dem inneren Nabenelement 12 über eine Steckverzahnung 16 um eine Hauptrotationsachse AR antriebsverbundenen und das innere Nabenelement 12 außenumfänglich umgebenden äußeren Nabenelement 14, wobei ein bezüglich der Hauptrotationsachse A_{R} feststehendes Gehäuseelement 3 vorgesehen ist und in dem Gehäuseelement 3 das innere und äußere Nabenelement 12, 14 gemeinsam um die Hauptrotationsache A_{R} umlaufend gelagert sind und das innere und äußere Nabenelement 12, 14 über eine Paarung von Axialkontaktflächen 20, 22 aneinander anliegen. Zumindest eine der Axialkontaktflächen 20, 22 ist aus einer verschleißoptimierten Schicht 28 gebildet. Durch die verschleißoptimierte Schicht 10 wird eine gestiegene Belastbarkeit der Werkstoffpaarung bereitgestellt.

## Beschreibung

Die Erfindung betrifft eine Welle-Nabe-Verbindung für ein Planetengetriebe, mit einem inneren Nabenelement, einem mit dem inneren Nabenelement über eine Steckverzahnung um eine Hauptrotationsachse A_{R} antriebsverbundenen und das innere Nabenelement außenumfänglich umgebenden äußeren Nabenelement, wobei ein bezüglich der Hauptrotationsachse A_{R} feststehendes Gehäuseelement vorgesehen ist und in dem Gehäuseelement das innere und äußere Nabenelement gemeinsam um die Hauptrotationsache A_{R} umlaufend gelagert sind und das innere und äußere Nabenelement über eine Paarung von Axialkontaktflächen aneinander anliegen.

In Windkraftgetriebe befinden sich in der Regel Planetengetriebe, die mit einer oder mehreren Planetenstufen ausgeführt sein können. Die Verzahnungen der Planetengetriebe sind in der Regel schrägverzahnt ausgeführt. Die Schrägverzahnung führt zu Axialkräften innerhalb einer Planetenstufe, die in der im Kraftfluss benachbarten Stufe abgestützt werden müssen. Es gibt bei den Planetengetrieben und den Stufen unterschiedliche Konfigurationen. Es kann in einer Konfiguration beispielsweise vorgesehen sein, dass in einer Planetenstufe der Abtrieb über das Sonnenrad bzw. über eine entsprechende Sonnenwelle, die radial in einer Laufverzahnung gegenüber den Planetenrädern und in einer Steckverzahnung gegenüber einem nachfolgenden Bauteil, beispielsweise einem hohlen Nabenelement einer Stirnradstufe, gelagert ist. Die Sonnenwelle ist hierbei strukturell das innere Nabenelement, während das hohle Nabenelement ein äußeres ist und als Hohlwelle ausgeführt sein kann. Auch kann es einen Aufbau geben, bei dem das äußere Nabenelement unmittelbar, also ohne Zwischenschaltung einer Stirnradstufe, einen nachfolgend angeordneten Generator antreibt, insbesondere den Rotor des Generators.

Die axiale Abstützung der in einer Hauptkraftrichtung eingeleiteten Axialkräfte erfolgt üblicherweise über eine Anlageschulter dieses Nabenelements, die sich gegen eine korrespondierende Anlageschulter des anderen Nabenelements abstützt. Die korrespondierenden Anlageschultern kontaktieren sich hierbei über eine Paarung von Axialkontaktflächen. Eine Anlageschulter kann auch als Wellenbund oder Wellenabsatz bezeichnet werden. In Abhängigkeit der Höhe der Axialkräfte und von betriebsbedingten Verlagerungen der beteiligten Bauteile relativ zueinander kann es zu Bewegung und damit zu Mikroverschleiß an den Axialkontaktflächen kommen. Ein möglicher Ansatz zur Reduktion von Mikroverschleiß besteht in der Maximierung der Kontaktflächen im Bereich des verfügbaren Bauraums. Der Nachteil besteht darin, dass die Kontaktflächen dabei bauteildimensionierend werden und die konstruktiven Möglichkeiten in dem begrenzten Bauraum weiter einschränken. Darüber hinaus oder in Kombination können die Kontaktflächen durch konventionelle Härteverfahren ertüchtigt werden. Dies kann zu einer zusätzlichen und kostenintensiven Hartbearbeitung von Bauteilen führen. Es besteht ein Bedürfnis die Belastbarkeit der Kontaktflächen durch andere Maßnahmen als durch entsprechende Dimensionierung zu steigern.

Es ist die Aufgabe der Erfindung Maßnahmen aufzuzeigen, die eine Steigerung der Belastbarkeit der Kontaktflächen ermöglichen.

Die Lösung der Aufgabe erfolgt durch eine Welle-Nabe-Verbindung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Welle-Nabe-Verbindung für ein Planetengetriebe, umfassend ein inneres Nabenelement, ein mit dem inneren Nabenelement über eine Steckverzahnung um eine Hauptrotationsachse A_{R} antriebsverbundenes und das innere Nabenelement außenumfänglich umgebendes äußeres Nabenelement, wobei ein bezüglich der Hauptrotationsachse A_{R} feststehendes Gehäuseelement vorgesehen ist und in dem Gehäuseelement das innere und äußere Nabenelement gemeinsam um die Hauptrotationsache A_{R} umlaufend gelagert sind und das innere und äußere Nabenelement über eine Paarung von Axialkontaktflächen aneinander anliegen, wobei zumindest eine der Axialkontaktflächen aus einer verschleißoptimierten Schicht gebildet ist.

Die Hauptrotationsachse A_{R} legt vorliegend die Axialrichtung fest, so dass sich aus dieser Axialrichtung die jeweiligen Radialrichtungen ergeben. Das äußere Nabenelement kann je nach zugrundeliegender Konfiguration als Hohlwelle ausgeführt sein. Die Steckverzahnung, die das innere und das äußere Nabenelement zur Übertragung eines Drehmoments formschlüssig miteinander verbindet, kann als Kurzverzahnung bezeichnet werden. Die Nabenelemente können über Lageranordnungen beispielsweise gegenüber einer Getriebegehäusestruktur, die das Gehäuseelement umfasst, gelagert sein, wobei eine der Lagerungen dazu ausgebildet ist Axialkräfte aufzunehmen bzw. abzustützen. Das innere Nabenelement, bevorzugt hohl ausgeführt, kann zentrisch ein Pitchrohr in sich aufnehmen, durch das elektrische Leitungen hindurchgeführt sind. Zwischen dem Pitchrohr und einem Innenumfang des Nabenelements ist ein Umfangsvolumen vorgesehen, in dem Öl gehalten sein kann.

Bei dem Gehäuseelement kann es sich um einen Deckel eines Getriebegehäuses handeln. Der Deckel kann gegen das Getriebegehäuse angesetzt und verschraubt sein.

Die verschleißoptimierte Schicht kann sowohl in Richtung einer harten Beschaffenheit als auch in Richtung einer weichen Beschaffenheit ausgestaltet sein. Wenn die verschleißoptimierte Schicht eine harte Beschaffenheit aufweist, dann ist durch die gestiegene Belastbarkeit der Werkstoffpaarung durch die Schicht eine Vergrößerung der Kontaktflächen nicht erforderlich. Dies führt zu Vorteilen bei der Nutzung des knappen Bauraums. Darüber hinaus trägt die vorliegende Erfindungsmeldung erheblich zu einer Steigerung der Zuverlässigkeit an der beschriebenen Kontaktstelle bei. Wenn die verschleißoptimierte Schicht eine weiche Beschaffenheit aufweist, dann besitzt die verschleißoptimierte Schicht eine gewisse Notlaufeigenschaft infolge der inhärenten Schmiereigenschaften, die beispielsweise über die Hinzugabe von Bronze oder Grafit erzeugt werden kann.

Durch die verschleißoptimierte Schicht wird eine gestiegene Belastbarkeit der Werkstoffpaarung bereitgestellt, so dass eine Vergrößerung der Kontaktfläche nicht länger notwendig ist. Dies führt zu Vorteilen bei der Nutzung des knappen Bauraums. Darüber hinaus trägt die verschleißoptimierte Schicht erheblich zu einer Steigerung der Zuverlässigkeit an der beschriebenen Kontaktstelle bei.

In einer bevorzugten Ausgestaltung ist vorgesehen, dass die zumindest eine verschleißoptimierte Schicht einen durch ein additives Fertigungsverfahren aufgebrachten Warmarbeitsstahl aus der Gruppe H, insbesondere H13, oder ein aufgebrachtes Gleitlagermaterial umfasst. Insbesondere kann hierbei vorgesehen sein, dass die verschleißoptimierte Schicht durch ein Laserauftragsschweißen aufgebracht ist. Für das Laserauftragsschweißen kann bevorzugt vorgesehen sein, dass dieser Prozess pulverbasiert oder drahtbasiert ausgestaltet ist. Die verschleißoptimierte Schicht kann eine Bronzelegierung umfassen.

In einer zudem bevorzugten Ausgestaltung ist vorgesehen, dass die Axialkontaktfläche des inneren und des äußeren Nabenelements auf einer jeweiligen und komplementär zueinander ausgebildeten Radialschulter der Nabenelemente ausgebildet sind. In einer möglichen Ausgestaltung kann vorgesehen sein, dass in dem inneren und/oder dem äußeren Nabenelement zumindest ein im Bereich der Axialkontaktflächen mündender Ölkanal verläuft, zur Beölung zumindest der Axialkontaktflächen. Hierbei kann der Ölkanal durch eine oder beide der Radialschultern geführt sein.

Die Aufgabe wird zudem gelöst durch ein Getriebe für eine Windkraftanlage, bestehend aus mindestens einer Planetenstufe und einem mit der zumindest einen Planentenstufe antriebsverbundenen äußeren Nabenelement, wobei die Verbindung zwischen der zumindest einen Planetenstufe und dem äußeren Nabenelement als Welle-Nabe-Verbindung wie beschrieben ausgeführt ist.

Die Aufgabe wird zudem gelöst durch einen Antriebsstrang für eine Windkraftanlage zur drehmomentübertragenden Verbindung eines Rotors mit einem Generator, umfassend eine Hauptlagereinheit, eine in der Hauptlagereinheit aufgenommene Hauptwelle, ein über die Hauptwelle angetriebenes Getriebe und einen mit dem Getriebe antriebsverbundenen Generator, wobei das Getriebe wie zuvor beschrieben ausgebildet ist.

Schließlich wird die Aufgabe gelöst durch eine Windkraftanlage, umfassend einen Rotorflansch mit einem Rotor und einen Generator, wobei ein an einem Maschinenträger gehaltener und den Rotorflansch mit dem Generator verbindender Antriebsstrang vorgesehen ist, wobei der Antriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1a): eine nicht maßstabsgetreue Darstellung einer Windkraftanlage mit einer Ausführung des Antriebsstrangs;
Fig. 1b): eine nicht maßstabsgetreue Darstellung einer Windkraftanlage mit einer alternativen Ausführung des Antriebsstrangs;
Fig. 2: einen strukturellen Aufbau einer möglichen Konfiguration einer Welle-Nabe-Verbindung;
Fig. 3: eine Detaillierung der Welle-Nabe-Verbindung nach Figur 2.

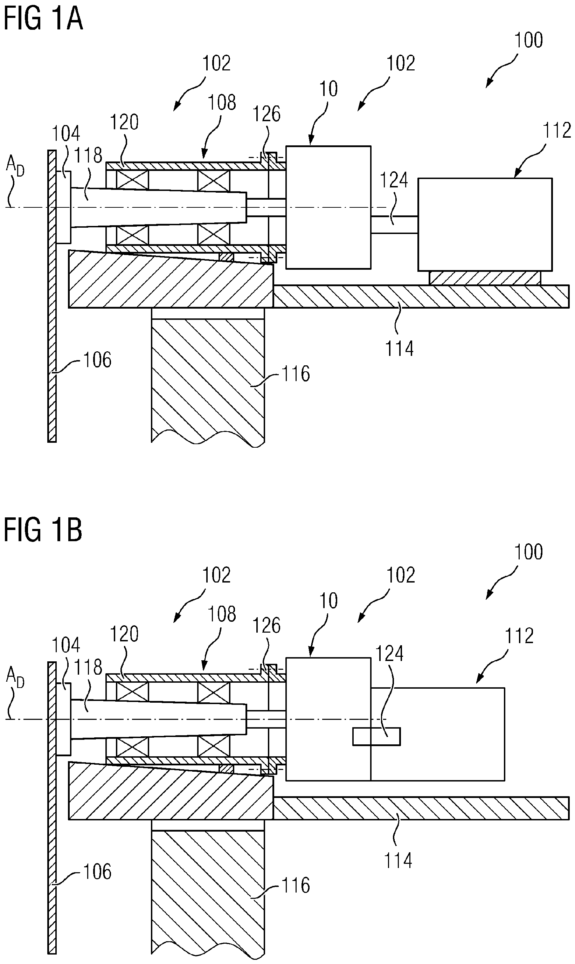

Die Figur 1a) zeigt in schematischer und nicht maßstabsgetreuer Darstellung eine Windkraftanlage 100 mit einem Antriebsstrang 102 in sogenannter aufgelöster Anordnung. Der Antriebstrang 102 umfasst vorliegend strukturell einen Rotorflansch 104 mit einem Rotor 106, eine Hauptlagereinheit 108, ein Getriebe 10 und einen Generator 112. Über einen Maschinenträger 114 werden zumindest die Hauptlagereinheit 108 und der Generator 112 über einen Turm 116 gegenüber einem nicht dargestellten Boden abgestützt. Die Hauptlagereinheit 108 umfasst eine Hauptwelle 118, die über eine angestellte Kegelrollenlagerung gegenüber einem Lagergehäuse 120 der Hauptlagereinheit 108 drehbar um eine Drehachse A_{D} gelagert ist. An einem Ende der Hauptwelle 118 ist der Rotorflansch 104 und an diesem der Rotor 106 gehalten. Das andere Ende der Hauptwelle 118 ist vorliegend starr mit dem Getriebe 10 antriebsmäßig verbunden, um ein von dem Rotor 106 aufgebrachtes Antriebsmoment in das Getriebe 10 einzuleiten. Das Getriebe 10 ist als Planetengetriebe mit einer oder mehreren Planetenstufen ausgeführt. Das Getriebe 10 ist über eine Generatorwelle 124 antriebsmäßig mit dem Generator 112 verbunden. Über einen Flansch 126 ist das Lagergehäuse 120 mit dem Getriebe 10 verbunden. Ein Reaktionsmoment des Getriebes 10 ist über den Flansch 126 gegenüber dem Maschinenträger 114 abgestützt.

Die Figur 1b) zeigt in schematischer und nicht maßstabsgetreuer Darstellung eine Windkraftanlage 100 mit einem Antriebsstrang 102 in sogenannter integrierter Anordnung. Der Antriebsstrang ist hierbei - im Gegensatz zu der aufgelösten Anordnung - derart ausgeführt, dass das Getriebe 10 und der Generator 112 eine strukturelle Einheit bilden und diese mittelbar über die Hauptlagereinheit 108 gegenüber dem Maschinenträger 114 abgestützt ist.

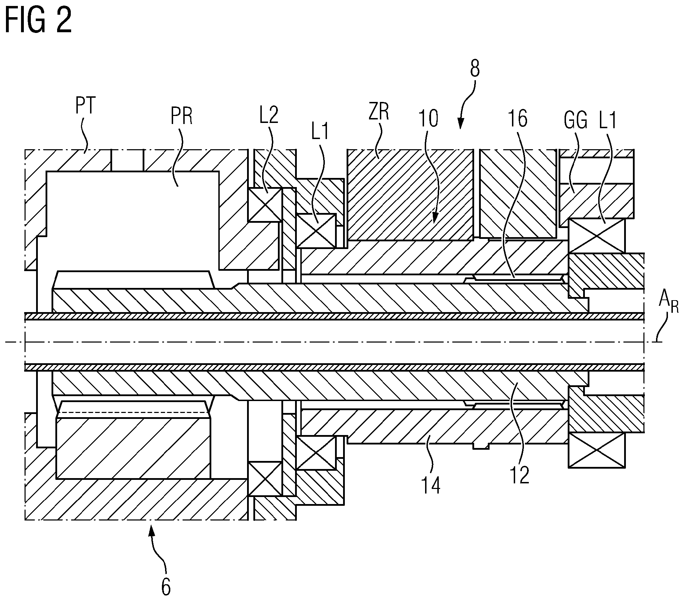

In der Figur 2 ist ein struktureller Aufbau einer möglichen Konfiguration einer Welle-Nabe-Verbindung 10 gezeigt, die bezüglich ihrer Details im Verlauf anhand der weiteren Figuren beschrieben wird. Die Welle-Nabe-Verbindung 10 ist vorliegend als Antriebsverbindung zwischen einer Planetenstufe 6 und einer Stirnradstufe 8 vorgesehen. Über die Stirnradstufe 8 kann eine nicht dargestellter Generator angetrieben werden. Von der Planetenstufe 6 ist lediglich ein Planetenträger PT und der Verzahnungseingriff von Planetenrädern PR mit einem inneren Nabenelement 12 gezeigt, wobei das innere Nabenelement 12 vorliegend als Sonnenwelle ausgeführt ist. Alternativ kann das innere Nabenelement 20 mit einem Planetenträger PT des Planetengetriebes 2 verbunden sein, was vorliegend allerdings nicht dargestellt ist. Von der Stirnradstufe 8 ist lediglich ein äußeres Nabenelement 14, welches als Hohlwelle ausgeführt ist, und ein mit diesem drehfest verbundenes Zahnrad ZR gezeigt. Sofern keine Stirnradstufe 8 vorgesehen ist, kann das äußere Nabenelement 14 zumindest mittelbar mit einem nicht dargestellten Generator, insbesondere dem Rotor des Generators, antriebsverbunden sein. Die Lagerung des äußeren Nabenelements 14 erfolgt über eine Lageranordnung L1 gegenüber einem Getriebegehäuse GG. Über die Lageranordnung L1 können in das äußere Nabenelement 14 eingeleitete Axialkräfte abgestützt werden. Die Lagerung des inneren Nabenelements 12 erfolgt zum einen über eine Steckverzahnung 16, über die das innere Nabenelement 12 mit den außenumfänglich angeordneten äußeren Nabenelement 14 antriebsverbunden ist. Zum anderen erfolgt die Lagerung des inneren Nabenelements 12 mittelbar über eine Lageranordnung L2 des Planetenradträgers PT in dem Getriebegehäuse GG. Eine Drehung der beiden Nabenelemente 12, 14 kann um eine Hauptrotationsachse A_{R} erfolgen. Das innere Nabenelement 12 bzw. die Sonnenwelle ist als Hohlwelle ausgeführt. Dies bietet bei einer Anwendung, in der die Welle-Nabe-Verbindung 10 beispielsweise in einem Planetengetriebe für eine Windkraftanlage zum Einsatz kommt, die Möglichkeit innerhalb der Sonnenwelle 12 ein nicht mitdrehendes Pitchrohr verlaufen zu lassen. Das äußere Nabenelement 14 ist vorliegend auch als Hohlwelle ausgeführt.

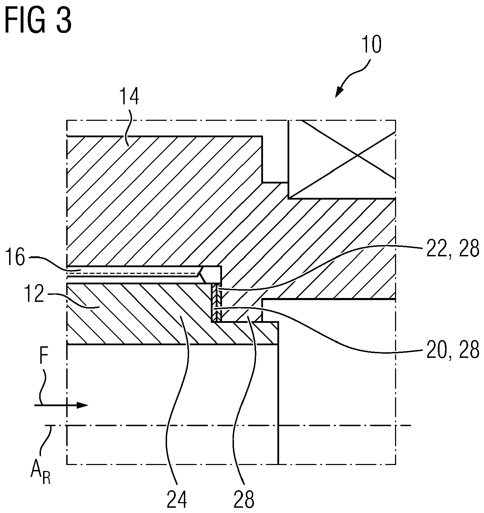

Die Figur 3 zeigt eine Detaillierung der Welle-Nabe-Verbindung 10, insbesondere des Bereichs, in dem sich eine auf das innere Nabenelement 12 wirkende Axialkraft an dem äußeren Nabenelement 14 abstützt. Zu Verdeutlichung ist mit dem Pfeil F eine Hauptkraftrichtung der Axialkraft eingezeichnet. Die Axialkraft entsteht während eines Normalbetriebs, im Gegensatz zu einem Reversierbetrieb, durch die in Schrägverzahnung ausgeführten Planetenstufen. Vorliegend ist der Winkel der Schrägverzahnung derart ausgeführt, dass die Hauptkraftrichtung F der Axialkraft in der Darstellung der Figur 2 von links nach rechts zeigt. Das innere Nabenelement 12 und das äußere Nabenelement 14 liegen über eine Paarung von Axialkontaktflächen 20, 22 aneinander an. Über die Axialkontaktflächen 20, 22 stützt sich die Axialkraft, die während eines Betriebs in das innere Nabenelement 12 eingeleitet wird, ab und wird in das äußere Nabenelement 12 eingeleitet. Trotz der formschlüssigen Verbindung zwischen beiden Nabenelementen 12, 14 über die Steckverzahnung 16 kommt es zu Relativbewegungen zwischen der Axialkontaktfläche 20 des inneren Nabenelements 12 einerseits und der Axialkontaktfläche 22 des äußeren Nabenelements 14 andererseits. Um einem hierdurch entstehenden Verschleiß zu begegnen, sind die Axialkontaktflächen 20, 22 aus einer verschleißoptimierten Schicht 28 gebildet. Die Axialkontaktfläche 20, 22, und damit die jeweiligen verschleißoptimierte Schicht 28, des inneren und des äußeren Nabenelements 12, 14 sind auf einer jeweiligen und komplementär zueinander ausgebildeten Radialschulter 24, 26 der beiden Nabenelemente 12 ausgebildet. Die Radialschultern 24, 26 und die jeweilige verschleißoptimierte Schicht 28 sind nicht maßstäblich zueinander dargestellt.

### Bezugszeichenliste

- 2: Planetengetriebe
- 3: Getriebegehäuse
- 4: Planetenstufe
- 6: Planetenstufe
- 8: Stirnradstufe
- 10: Welle-Nabe-Verbindung
- 12: Nabenelement
- 14: Nabenelement
- 16: Steckverzahnung
- 18: Stirnfläche
- 20: Axialkontaktfläche
- 22: Axialkontaktfläche
- 24: Radialschulter
- 26: Radialschulter
- 28: verschleißoptimierte Schicht
- 100: Windkraftanlage
- 102: Antriebstrang
- 104: Rotorflansch
- 106: Mehrblattrotor
- 108: Hauptlagereinheit
- 112: Generator
- 114: Maschinenträger
- 116: Turm
- 118: Hauptwelle
- 120: Lagergehäuse
- 124: Generatorwelle
- 126: Flansch

## Patentansprüche

**1.** Welle-Nabe-Verbindung (10) für ein Planetengetriebe (2), umfassend
ein inneres Nabenelement (12),
ein mit dem inneren Nabenelement (12) über eine Steckverzahnung (16) um eine Hauptrotationsachse A_{R} antriebsverbundenes und das innere Nabenelement (12) außenumfänglich umgebendes äußeres Nabenelement (14),
wobei ein bezüglich der Hauptrotationsachse A_{R} feststehendes Gehäuseelement (3) vorgesehen ist und in dem Gehäuseelement (3) das innere und äußere Nabenelement (12, 14) gemeinsam um die Hauptrotationsache A_{R} umlaufend gelagert sind und das innere und äußere Nabenelement (12, 14) über eine Paarung von Axialkontaktflächen (20, 22) aneinander anliegen,
**dadurch gekennzeichnet, dass** zumindest eine der Axialkontaktflächen (20, 22) aus einer verschleißoptimierten Schicht (28) gebildet ist.

**2.** Welle-Nabe-Verbindung (10) nach Anspruch 1, **dadurch gekennzeichnet, dass** die zumindest eine verschleißoptimierte Schicht (28) durch ein additives Fertigungsverfahren aufgebrachten Warmarbeitsstahl aus der Gruppe H oder ein aufgebrachtes Gleitlagermaterial umfasst.

**3.** Welle-Nabe-Verbindung (10) nach Anspruch 1 oder 2, **dadurch gekennzeichnet, dass** die verschleißoptimierte Schicht eine Bronzelegierung umfasst.

**4.** Welle-Nabe-Verbindung (10) nach einem der Ansprüche 1 bis 3, **dadurch gekennzeichnet, dass** die mindestens eine verschleißoptimierte Schicht (28) durch ein Laserauftragsschweißen aufgebracht ist.

**5.** Welle-Nabe-Verbindung (10) nach einem der Ansprüche 1 bis 4, **dadurch gekennzeichnet, dass** der Prozess des Laserauftragsschweißens pulverbasiert oder drahtbasiert ausgestaltet ist.

**6.** Welle-Nabe-Verbindung (10) nach einem der Ansprüche 1 bis 5, **dadurch gekennzeichnet, dass** die Axialkontaktfläche (20, 22) des inneren und des äußeren Nabenelements (12) auf einer jeweiligen und komplementär zueinander ausgebildeten Radialschulter (24, 26) der Nabenelemente (12) ausgebildet sind.

**7.** Welle-Nabe-Verbindung (10) nach einem der Ansprüche 1 bis 6, **dadurch gekennzeichnet, dass** das innere und das äußere Nabenelement (20, 22) als Hohlwellenelemente ausgeführt sind, wobei das innere Nabenelement (20) als hohle Sonnenwelle für das Planetengetriebe (2) ausgeführt ist.

**8.** Welle-Nabe-Verbindung (10) nach einem der Ansprüche 1 bis 6, **dadurch gekennzeichnet, dass** das innere und das äußere Nabenelement (20, 22) als Hohlwellenelemente ausgeführt sind, wobei das innere Nabenelement (20) mit einem Planetenträger (PT) des Planetengetriebes (2) verbunden ist.

**9.** Welle-Nabe-Verbindung (10) nach einem der Ansprüche 1 bis 8, dass in dem inneren und/oder dem äußeren Nabenelement (20, 22) zumindest ein im Bereich der Axialkontaktflächen (20, 22) mündender Ölkanal verläuft, zur Beölung zumindest der Axialkontaktflächen (20, 22).

**10.** Getriebe (2) für eine Windkraftanlage, bestehend aus mindestens einer Planetenstufe (4) und einem mit der zumindest einen Planentenstufe (4) antriebsverbundenen äußeren Nabenelement (14), wobei die Verbindung zwischen der zumindest einen Planetenstufe (4) und dem äußeren Nabenelement (14) als Welle-Nabe-Verbindung (10) nach einem der Ansprüche 1 bis 9 ausgeführt ist.

**11.** Antriebsstrang (102) für eine Windkraftanlage (100) zur drehmomentübertragenden Verbindung eines Rotors (106) mit einem Generator (112), umfassend eine Hauptlagereinheit (108), eine in der Hauptlagereinheit (108) aufgenommene Hauptwelle (118), ein über die Hauptwelle (118) angetriebenes Getriebe (10) und einen mit dem Getriebe (2) antriebsverbundenen Generator (112), **dadurch gekennzeichnet, dass** das Getriebe (2) nach Anspruch 10 ausgebildet ist.

**12.** Antriebsstrang nach Anspruch 11, **dadurch gekennzeichnet, dass** ein Maschinenträger (114) vorgesehen ist, an dem das Getriebe (10) und der Generator (112) gehalten sind.

**13.** Antriebsstrang nach Anspruch 12, **dadurch gekennzeichnet, dass** der Generator (112) mittelbar über das Getriebe (10) an dem Maschinenträger (114) gehalten ist.

**12.** Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach einem der Ansprüche 11 bis 13 ausgebildet ist.
